# EUROPÄISCHE PATENTSCHRIFT

(11) **EP 3 011 370 B1**
(45) Veröffentlichungstag und Bekanntmachung des Hinweises auf die Patenterteilung: **29.03.2017**
(21) Anmeldenummer: 14727817.0
(22) Anmeldetag: 02.06.2014
(51) Int. Cl.: G02B 1/118, B29C 59/14, C08J 7/12, G02B 1/12, B29D 11/00, G02B 1/111

(54) **VERFAHREN ZUR HERSTELLUNG EINER ENTSPIEGELUNGSSCHICHT**
METHOD FOR PRODUCING AN ANTIREFLECTIVE LAYER
PROCÉDÉ DE FABRICATION D'UNE COUCHE ANTIREFLET

(30) Priorität: 19.06.2013 DE 102013106392
(43) Veröffentlichungstag der Anmeldung: 27.04.2016
(73) Patentinhaber: Fraunhofer Gesellschaft zur Förderung der angewandten Forschung E.V., 80686 München (DE)
(72) Erfinder: SCHULZ, Ulrike, 07751 Jena (DE); MUNZERT, Peter, 07743 Jena (DE); RICKELT, Friedrich, 07745 Jena (DE); KAISER, Norbert, 07745 Jena (DE)
(74) Vertreter: Epping - Hermann - Fischer
(86) Internationale Anmeldenummer: PCT/EP2014/061379
(87) Internationale Veröffentlichungsnummer: WO 2014/202375

(56) Entgegenhaltungen:
- DE-A1- 10 241 708
- WONCHUL JOO ET AL: "Broadband Antireflection Coating Covering from Visible to Near Infrared Wavelengths by Using Multilayered Nanoporous Block Copolymer Films", LANGMUIR, AMERICAN CHEMICAL SOCIETY, NEW YORK, NY; US, Bd. 26, Nr. 7, 6. April 2010 (2010-04-06), Seiten 5110-5114, XP002608871, ISSN: 0743-7463, DOI: 10.1021/LA9035858 [gefunden am 2009-12-03]
- SCHULZ U ET AL: "Antireflection of transparent polymers by advanced plasma etching procedures", OPTICS EXPRESS, OSA (OPTICAL SOCIETY OF AMERICA), WASHINGTON DC, (US), Bd. 15, Nr. 20, 26. September 2007 (2007-09-26), Seiten 13108-13113, XP002532644, ISSN: 1094-4087, DOI: 10.1364/OE.15.013108

## Beschreibung

Verfahren zur Herstellung einer Entspiegelungsschicht Die Erfindung betrifft ein Verfahren zur Herstellung einer Entspiegelungsschicht auf einem Substrat, insbesondere auf einem gekrümmten Glas- oder Kunststoffsubstrat für optische Anwendungen.

Zur Entspiegelung von Oberflächen, insbesondere von optischen Elementen oder Displays, werden üblicherweise reflexionsmindernde Interferenzschichtsysteme verwendet, die mehrere alternierende Schichten aus hochbrechenden und niedrigbrechenden Materialien enthalten. Als Material mit einer besonders niedrigen Brechzahl im sichtbaren Spektralbereich wird derzeit MgF₂ mit n = 1,38 eingesetzt. Die Entspiegelungswirkung herkömmlicher dielektrischer Schichtsysteme könnte verbessert werden, wenn Materialien mit geringerer Brechzahl zur Verfügung stehen würden.
Eine alternative Möglichkeit zur Verminderung der Reflexion eines optischen Elements ist aus der Patentschrift DE 10241708 B4 bekannt. Bei diesem Verfahren wird an der Oberfläche eines Kunststoffsubstrats mittels eines Plasmaätzprozesses eine Nanostruktur erzeugt, durch die die Reflexion des Kunststoffsubstrats vermindert wird. Die Entspiegelung eines optischen Elements durch die Erzeugung einer Nanostruktur an dessen Oberfläche hat den Vorteil, dass eine geringe Reflexion über einen weiten Einfallswinkelbereich erzielt wird.

Die Druckschrift DE 102008018866 A1 beschreibt ein reflexionsminderndes Interferenzschichtsystem, auf das eine organische Schicht aufgebracht wird, die mittels eines Plasmaätzprozesses mit einer Nanostruktur versehen wird.

Allerdings erreichen plasmageätzte Nanostrukturen auf den meisten Materialien nur eine Tiefe von 100 nm bis 200 nm. Eine solche Dicke ist für ebene und leicht gekrümmte Oberflächen ausreichend, um ein Substrat im visuellen Spektralbereich von 400 nm bis 700 nm für Lichteinfallswinkel von 0° (senkrechter Lichteinfall) bis 60° so zu entspiegeln, dass die Restreflexion nur etwa 1% beträgt. Teilweise werden aber breitbandige Entspiegelungen gefordert, die über noch größere Lichteinfallswinkelbereiche funktionieren sollen.

Ein besonderes Problem stellt die Herstellung einer Entspiegelungsschicht auf niedrigbrechenden (n < 1.7) stark gekrümmten Oberflächen dar. Eine durch einen gerichteten Vakuumbeschichtungsprozess wie Sputtern oder Aufdampfen abgeschiedene Schicht hat an dem Ort, an dem sie aufwächst, eine Dicke, die vom Winkel des auftreffenden Dampfes abhängt. Die Schichtdicke nimmt mit zunehmendem Auftreffwinkel ab. Bei einem Interferenzschichtsystem nimmt daher die physikalische Dicke d aller Schichten mit zunehmendem Auftreffwinkel ab. Für die optische Funktion ist jedoch die optische Dicke n * d von Bedeutung, wobei n die Brechzahl ist. Die Brechzahl n ist bei den aus hochbrechenden und niedrigbrechenden Materialien bestehenden Schichtsystemen unterschiedlich, so dass sich die optische Funktion bei variierender Dicke zusätzlich verändert. Aufgrund dieser Problematik weist die Restreflexion von Antireflexschichten im Randbereich von Linsen in der Regel unerwünscht hohe Werte auf.

Eine Verbesserung könnte erzielt werden, wenn man eine niedrigbrechende Gradientenschicht so dick herstellen könnte, dass ein Dickenabfall von mindestens 50% toleriert wird. Die technische Realisierung auf hochbrechenden Substraten (n > 1.7) gestaltet sich einfacher als auf den gebräuchlichen niedrigbrechenden Gläsern, da schon mit natürlichen Materialien ein Schichtaufbau realisierbar ist, bei dem die Brechzahl allmählich abnimmt.

Für die Herstellung relativ dicker Schichten mit effektiver Brechzahl < 1.38 gibt es technisch nur wenige Möglichkeiten. In der Druckschrift W. Joo , H.J. Kim and J.K. Kim, "Broadband Antireflection Coating Covering from Visible to Near Infrared Wavelengths by Using Multilayered Nanoporous Block Copolymer Films", Langmuir 26(7), 2010, 5110-5114, wird die Herstellung einer dicken Gradientenschicht mittels Sol-Gel-Prozessen beschrieben, wobei hier aber die Abscheidung auf gekrümmten Oberflächen schwierig sein könnte.

Ein vakuumtechnisches Verfahren zur Herstellung mehrschichtiger Gradientenschichten ist aus der Druckschrift S.R. Kennedy, M.J. Brett, "Porous Broadband Antireflection Coating by Glancing Angle Deposition", Appl Opt. 42, 4573-4579, 2003, bekannt. Dabei werden Oxide oder Fluoride unter schrägem Winkel auf das Substrat aufgedampft. Durch Abschattungseffekte entstehen hier ebenfalls poröse Schichten. Das Substrat muss aus diesem Grund also schräg zur Dampfeinfallswinkel positioniert werden. Auf einer stark gekrümmten Oberfläche würde es jedoch zu zusätzlichen Abschattungseffekten durch die Linsengeometrie kommen, so dass das Verfahren für gekrümmte Linsen nicht ohne weiteres angewendet werden kann.

Der Erfindung liegt die Aufgabe zugrunde, ein verbessertes Verfahren zur Herstellung einer Entspiegelungsschicht anzugeben, mit dem verschiedene Oberflächen breitbandig und winkelunabhängig entspiegelt werden können, wobei das Verfahren insbesondere für niedrigbrechende Gläser und Kunststoffe mit einer Brechzahl n < 1,7 und für stark gekrümmte Oberflächen geeignet sein soll.

Diese Aufgabe wird durch ein Verfahren zur Herstellung einer Entspiegelungsschicht gemäß dem unabhängigen Anspruch 1 gelöst. Vorteilhafte Ausgestaltungen und Weiterbildungen der Erfindung sind Gegenstand der abhängigen Ansprüche.

Bei dem Verfahren zur Herstellung einer Entspiegelungsschicht auf einem Substrat wird eine erste Nanostruktur in einem ersten Material mit einem ersten Plasmaätzprozess erzeugt. Bei dem ersten Material kann es sich um das Material des Substrats oder alternativ um das Material einer auf das Substrat aufgebrachten Schicht aus einem ersten organischen Material handeln. Durch den ersten Plasmaätzprozess wird in dem ersten Material vorteilhaft ein Brechzahlgradient erzeugt, wobei die Brechzahl in einer vom Substrat zur Oberfläche verlaufenden Richtung abnimmt.

Auf die mit dem ersten Plasmaätzprozess erzeugte erste Nanostruktur wird in einem weiteren Verfahrensschritt eine Schicht aus einem zweiten organischen Material aufgebracht. In der Schicht aus dem zweiten organischen Material wird nachfolgend eine zweite Nanostruktur mit einem zweiten Plasmaätzprozess erzeugt. Auf diese Weise wird vorteilhaft ein Brechzahlgradient in der Schicht aus dem zweiten organischen Material erzeugt, wobei die Brechzahl in einer vom Substrat zur Oberfläche verlaufenden Richtung abnimmt.

Bei dem Verfahren weist das zweite Material bei der Durchführung des zweiten Plasmaätzprozesses vorteilhaft eine größere Ätzrate als das erste Material auf. Dies hat den Vorteil, dass die zuvor erzeugte erste Nanostruktur bei der Durchführung des zweiten Plasmaätzprozesses nicht oder nur geringfügig beeinflusst wird.

Bei dem hierin beschriebenen Verfahren zur Herstellung einer Entspiegelungsschicht wird die mit dem ersten Plasmaätzprozess erzeugte erste Nanostruktur, die eine erste Brechzahlgradientenschicht ausbildet, vorteilhaft mit einer Schicht aus einem zweiten organischen Material überschichtet, in dem mit einem zweiten Plasmaätzprozess eine zweite Nanostruktur ausgebildet wird, die eine zweite Brechzahlgradientenschicht ausbildet. Auf diese Weise ist es vorteilhaft möglich, eine aus zwei Teilschichten gebildete vergleichsweise dicke Brechzahlgradientenschicht zu erzeugen, die auch auf gekrümmten Substraten eine sehr gute Entspiegelung in einem großen Winkelbereich bewirkt. Die Gesamtdicke der aus der ersten Nanostruktur und der zweiten Nanostruktur gebildeten Brechzahlgradientenschicht beträgt bevorzugt mindestens 250 nm.

Die bei dem ersten Plasmaätzprozess erzeugte erste Nanostruktur weist bei einer vorteilhaften Ausgestaltung eine Tiefe zwischen 100 nm und 200 nm auf. Mit anderen Worten erstreckt sich die Nanostruktur bis in eine Tiefe zwischen 100 nm und 200 nm in das Substrat oder in die auf das Substrat aufgebrachte Schicht aus dem ersten Material hinein.

Die erste Nanostruktur weist vorteilhaft eine mittlere effektive Brechzahl n₁ zwischen 1,25 und 1,4 auf. Unter der effektiven Brechzahl ist hier und im Folgenden die über die Nanostruktur gemittelte Brechzahl zu verstehen, deren Wert aufgrund der durch die Nanostruktur erzeugten Ausnehmungen in dem ersten Material vorteilhaft geringer ist als die Brechzahl einer kontinuierlichen Schicht aus dem ersten Material.

Die Schicht aus dem zweiten organischen Material wird gemäß einer bevorzugten Ausgestaltung mit einer Schichtdicke zwischen 200 nm und 400 nm auf die erste Nanostruktur aufgebracht. Bei einer Schichtdicke in diesem Bereich ist die Schicht aus dem zweiten organischen Material einerseits dick genug, dass eine ausreichend tiefe Nanostruktur in ihr erzeugt werden kann, und andererseits dünn genug, dass in ihr ein bis in den Bereich der Grenzfläche zur ersten Nanostruktur reichender Brechzahlgradient erzeugt werden kann.

Die zweite Nanostruktur weist wie die erste Nanostruktur vorteilhaft eine Tiefe zwischen 100 nm und 200 nm auf.

Die mittlere effektive Brechzahl n₂ der zweiten Nanostruktur ist vorzugsweise kleiner als die mittlere effektive Brechzahl n₁ der ersten Nanostruktur. Bevorzugt weist die zweite Nanostruktur eine mittlere effektive Brechzahl n₂ im Bereich zwischen 1,08 und 1,25 auf. Die zweite Nanostruktur weist somit vorteilhaft eine effektive Brechzahl auf, der noch geringer als die effektive Brechzahl der ersten Nanostruktur und insbesondere so gering ist, dass er mit einer homogenen Schicht nicht erzielbar wäre.

Die erste und die zweite Nanostruktur weisen vorzugsweise jeweils Strukturelemente in Form von Erhebungen, Vertiefungen oder Poren auf, der Breite im Mittel weniger als 150 nm, bevorzugt zwischen 20 nm und 120 nm beträgt.

Bei einer bevorzugten Ausgestaltung des Verfahrens wird vor dem Aufbringen der Schicht aus dem zweiten organischen Material eine Ätzstoppschicht auf die erste Nanostruktur aufgebracht. Durch die Ätzstoppschicht wird vorteilhaft verhindert, dass Teile der ersten Nanostruktur bei der Durchführung des zweiten Plasmaätzprozesses abgetragen werden. Die Ätzstoppschicht weist vorzugsweise eine Dicke von nicht mehr als 30 nm auf. Eine derart geringe Dicke der Ätzstoppschicht hat den Vorteil, dass die effektive Brechzahl im Grenzbereich zwischen der ersten Nanostruktur und der zweiten Nanostruktur nur unwesentlich beeinflusst wird. Bei der Ätzstoppschicht kann es sich beispielsweise um eine SiO₂-Schicht handeln.

Bei einer weiteren vorteilhaften Ausgestaltung des Verfahrens wird nach der Erzeugung der zweiten Nanostruktur eine Schutzschicht auf die zweite Nanostruktur aufgebracht. Die Schutzschicht ist beispielsweise eine anorganische Schicht wie insbesondere eine SiO₂-Schicht. Die Schutzschicht weist vorteilhaft eine Dicke von nicht mehr als 30 nm auf. Dies hat den Vorteil, dass die Brechzahl an der Oberfläche der zweiten Nanostruktur durch die Schutzschicht nur unwesentlich beeinflusst wird.

Für das erste Material oder das zweite Material ist vorteilhaft eine Vielzahl von Materialien geeignet, in denen mittels eines Plasmaätzprozesses eine Nanostruktur erzeugt werden kann. Bevorzugt enthält das erste Material und/oder das zweite Material eines der folgenden Materialien: 2,4,6-Triamino-1,3,5-triazin (Melamin), 2,2'-methylenebis(6-(2H-benzotriazol-2-yl)-4-1,1,3,3-tetramethylbutyl)phenol (MBP), N,N'-Bis(3-methylphenyl)-N,N'-diphenylbenzidin (TPD), N,N'-Di(naphth-1-yl)-N,N'-diphenyl-benzidin (NPB), N,N,N',N'-Tetraphenylbenzidin (TPB), Tris(4-carbazoyl-9-ylphenyl)amin (TCTA), 5,5'-Di(4-biphenylyl)-2,2'-bithiophen (B2TP), 2,3-Dihydro-1,4-phthalazinedion, Pentacen, HMDSO, Allylamin, Allylalkohol, Villylacetat, Styren, Parylen, Ormocer, Polyurethan, Polysiloxanlack, Acryllack, Silikon, PMMA, Polycarbonat, ein Cycloolefin (zum Beispiel Zeonex, COC oder APEL), Polyamid, PTFE.

Bei einer Ausführungsform der Erfindung ist das erste Material das Material des Substrats. Die erste Nanostruktur wird bei dieser Ausführungsform in der Oberfläche des Substrats erzeugt. Dies setzt voraus, dass das Material des Substrats mit einem Plasmaätzprozess strukturierbar ist. Das Substrat weist bei dieser Ausführungsform vorteilhaft ein erstes organisches Material auf. Insbesondere kann das Substrat PMMA, Polycarbonat, Cycloolefin, Polyamid oder PTFE aufweisen.

Bei einer alternativen Ausführungsform ist das erste Material das Material einer auf das Substrat aufgebrachten Schicht aus einem ersten organischen Material. Bei dieser Ausführungsform wird die erste Nanostruktur nicht in der Oberfläche des Substrats, sondern in der auf das Substrat aufgebrachten ersten organischen Schicht erzeugt. Diese Ausführungsform ist insbesondere dann vorteilhaft, wenn das Material des Substrats nicht oder nur schwer mittels eines Plasmaätzprozesses strukturierbar ist. Beispielsweise kann das Substrat bei dieser Ausführungsform ein Glas, insbesondere Quarzglas, aufweisen.

Wenn die erste Nanostruktur in einer auf das Substrat aufgebrachten ersten organischen Schicht hergestellt wird, können vor dem Aufbringen der ersten organischen Schicht eine oder mehrere anorganische schichten auf das Substrat aufgebracht werden. Die mindestens eine anorganische Schicht kann insbesondere eine Oxid-, Nitrid- oder Fluoridschicht sein oder Mischungen dieser Materialien enthalten.

Das Verfahren ist insbesondere zur Herstellung von Entspiegelungsschichten auf gekrümmten Substraten geeignet. Insbesondere kann mit dem Verfahren eine Entspiegelungsschicht erzeugt werden, die auch für große Einfallswinkel bei einem gekrümmten Substrat nur eine sehr geringe Restreflexion aufweist.

Weiterhin hat das Verfahren den Vorteil, dass eine breitbandige und weitgehend winkelunabhängige Entspiegelung auf Substraten erzielt werden kann, die selbst bereits eine vergleichweise niedrige Brechzahl aufweisen. Das Substrat kann insbesondere eine Brechzahl n_{S} < 1,7 aufweisen.

Die Erfindung wird im Folgenden im Zusammenhang mit den Figuren 1 bis 8 näher erläutert.

Es zeigen:
- Figur 1: eine schematische Darstellung einer als Substrat fungierenden Linse mit sphärischer Oberfläche mit einer Illustration der Schichtdickenänderung bei verschiedenen Dampfeinfallswinkeln,
- Figur 2: eine grafische Darstellung von Reflexionsspektren an Positionen A und B der in Fig. 1 gezeigten Linse für ein konventionelles Interferenzschichtsystem aus 4 Schichten (V1) sowie für eine Einfachschicht aus MgF₂ (V2),
- Figuren 3A bis 3F: eine schematische Darstellung eines ersten Ausführungsbeispiels des Verfahrens zur Herstellung einer Entspiegelungsschicht anhand von Zwischenschritten,
- Figuren 4A bis 4F: eine schematische Darstellung eines zweiten Ausführungsbeispiels des Verfahrens zur Herstellung einer Entspiegelungsschicht anhand von Zwischenschritten,
- Figur 5: eine grafische Darstellung von Reflexionsspektren für ein Ausführungsbeispiel der Entspiegelungsschicht auf einem ebenen Substrat unter verschiednen Lichteinfallswinkeln und ein nicht beschichtetes Vergleichssubstrat,
- Figur 6: eine grafische Darstellung von Reflexionsspektren an Positionen A und B der in Fig. 1 gezeigten Linse für zwei Ausführungsbeispiele der Entspiegelungsschicht,
- Figur 7: eine grafische Darstellung von Reflexionsspektren an Positionen A und B der in Fig. 1 gezeigten Linse für zwei weitere Ausführungsbeispiele der Entspiegelungsschicht, und
- Figur 8: eine grafische Darstellung von Reflexionsspektren unter verschiednen Lichteinfallswinkeln für ein weiteres Ausführungsbeispiel der Entspiegelungsschicht auf einem ebenen Substrat.

Gleiche oder gleich wirkende Bestandteile sind in den Figuren jeweils mit den gleichen Bezugszeichen versehen. Die dargestellten Bestandteile sowie die Größenverhältnisse der Bestandteile untereinander sind nicht als maßstabsgerecht anzusehen.

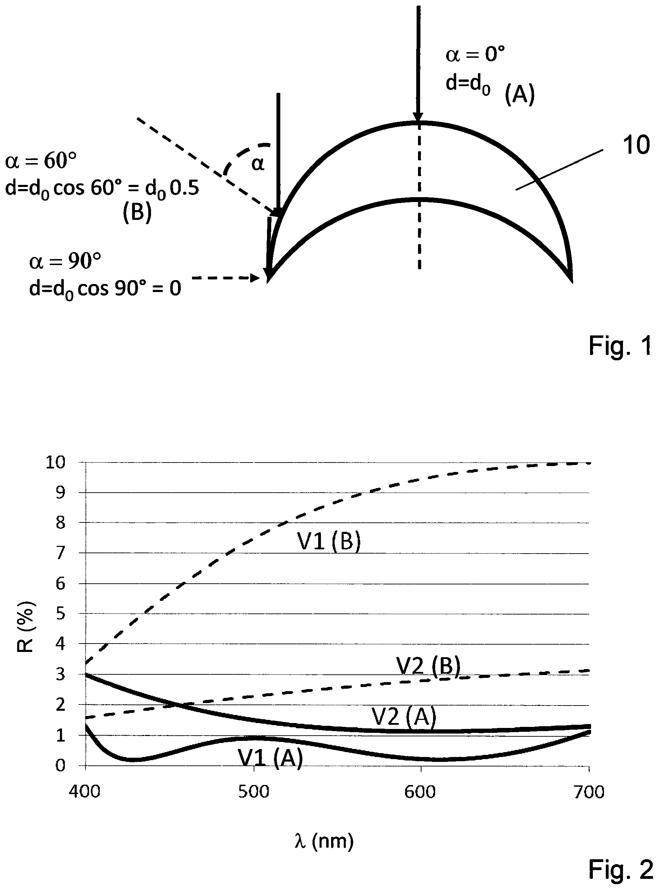

In Fig. 1 ist schematisch eine sphärische Linse dargestellt, die mit einer Entspiegelungsschicht versehen werden soll. Die sphärische Linse fungiert somit als Substrat 10 für die Entspiegelungsschicht. Die Linse ist beispielsweise eine Glaslinse mit einer Brechzahl n_{S} = 1,53. Wenn eine Schicht mit einem gerichteten Vakuumbeschichtungsprozess wie beispielsweise Sputtern oder Aufdampfen auf der gekrümmten Oberfläche der Linse abgeschieden wird, hat die Schicht an dem Ort, an dem sie aufwächst, eine Dicke, die vom Winkel des auftreffenden Dampfes abhängt. Es ist allgemein bekannt, dass für die Schichtdicke d in Abhängigkeit vom Dampfeinfallswinkel α auf der Linse gilt: d(α) = d₀ * cos α. Dabei ist d₀ die Schichtdicke in der Linsenmitte (senkrechter Dampfeinfall). Bei einer perfekten Halbkugel beträgt die Schichtdicke somit am äußersten Rand 0 nm, es wird zumindest theoretisch gar keine Schicht abgeschieden. In einem Punkt B der Linse, der einen Dampfeinfallswinkel α = 60° aufweist, beträgt der Schichtdickenabfall bereits 50% gegenüber dem Mittelpunkt A der Linse, auf den der Dampf senkrecht (α = 0°) auftrifft.

In Fig. 2 wird der Einfluss des Schichtdickenabfalls zum Rand der Linse für nicht erfindungsgemäße Vergleichsbeispiele von herkömmlichen Entspiegelungsschichten verdeutlicht.

Dargestellt ist die Reflexion R in Abhängigkeit von der Wellenlänge λ an den Punkten A und B der in Fig. 1 gezeigten Linse für ein konventionelles Interferenzschichtsystem aus vier Schichten (V1) sowie für eine Einfachschicht aus MgF₂ (V2). Die Grafik verdeutlicht, dass sich im Mittelpunkt A der Linse mit dem Interferenzschichtsystem V1 aus vier Schichten eine geringere Restreflexion erzielen lässt als mit der Einzelschicht V2. Im Punkt B, in dem die Schichtdicke um 50% reduziert ist, wird mit der Einzelschicht V2 eine geringere Restreflexion R und somit eine bessere Entspiegelung erzielt. Das mehrschichtige Interferenzschichtsystem weist mit anderen Worten eine geringere Toleranz für Änderungen der Schichtdicke auf als die Einzelschicht. Mit dem erfindungsgemäßen Verfahren soll eine Entspiegelungsschicht hergestellt werden, die sowohl bei senkrechtem Lichteinfall als auch bei schrägem Lichteinfall eine besonders geringe Restreflexion aufweist.

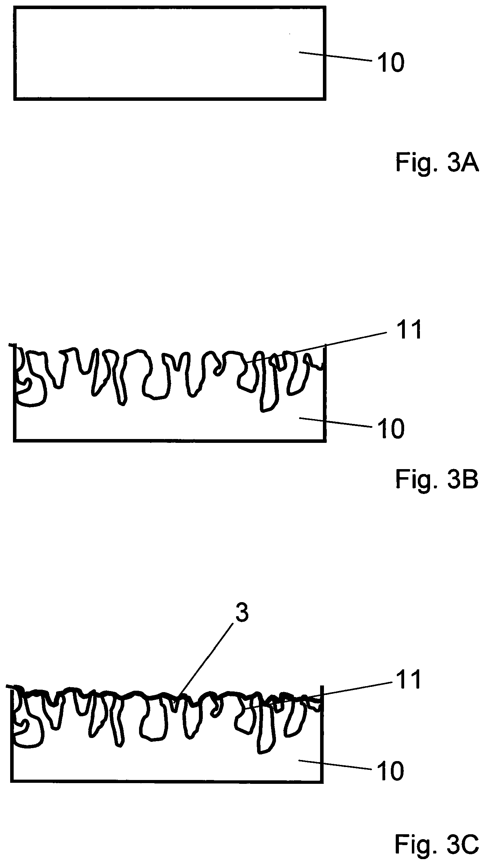

In den Figuren 3A bis 3F ist ein erstes Ausführungsbeispiel des Verfahrens zur Herstellung einer Entspiegelungsschicht anhand von Zwischenschritten dargestellt.

Bei dem Ausführungsbeispiel des Verfahrens wird das in Figur 3A dargestellte Substrat 10 mit einer Entspiegelungsschicht versehen. Bei dem dargestellten Ausführungsbeispiel ist das Substrat 10 ein ebenes Substrat. Alternativ könnte das Substrat 10 bei dem Verfahren insbesondere ein gekrümmtes Substrat sein, wie beispielsweise die in Figur 1 dargestellte sphärische Linse.

Bei dem in Figur 3B dargestellten Zwischenschritt ist das Substrat 10 mittels eines ersten Plasmaätzprozesses mit einer erste Nanostruktur 11 versehen worden. Dies setzt voraus, dass das Substrat 10 ein Material aufweist, das mittels eines Plasmaätzprozesses strukturierbar ist. Bevorzugt weist das Substrat 10 bei dieser Ausgestaltung ein erstes organisches Material auf, bei dem es sich insbesondere um eines der Polymere PMMA, Polycarbonat, Cycloolefin, Polyamid oder PTFE handeln kann. Bei dem Plasmaätzprozess wird die Oberfläche des Substrats 10 beispielsweise mittels einer Plasmaionenquelle mit Ionen beschossen, um die erste Nanostruktur 11 zu erzeugen. Ein solcher Plasmaätzprozess ist an sich aus den in der Beschreibungseinleitung zitierten Druckschriften DE 10241708 B4 oder DE 102008018866 A1 bekannt und wird daher nicht näher erläutert.

Vor der Durchführung des Plasmaätzprozesses kann eine dünne Initialschicht (nicht dargestellt) auf die zu strukturierende Oberfläche aufgebracht werden, die vorzugsweise eine Dicke von nur etwa 2 nm aufweist. Bei der Initialschicht handelt es sich vorzugsweise um eine dünne Oxidschicht, Nitridschicht oder Fluoridschicht. Diese Vorgehensweise ist an sich aus der Druckschrift DE 102008018866 A1 bekannt.

Die erste Nanostruktur 11 weist eine Vielzahl von Strukturelementen in Form von Erhebungen, Vertiefungen oder Poren auf, die vorteilhaft eine Breite von nicht mehr als 150 nm, besonders bevorzugt zwischen 20 nm und 120 nm aufweisen. Durch die erste Nanostruktur wird ein Brechzahlgradient erzeugt, der in einer vom Substrat 10 zur Oberfläche zeigenden Richtung abnimmt. Die mittlere effektive Brechzahl der ersten Nanostruktur 11 beträgt bevorzugt zwischen 1,25 und 1,40.

Bei einer Ausgestaltung des Verfahrens wird, wie in Figur 3C dargestellt, eine Ätzstoppschicht 3 auf die erste Nanostruktur 11 aufgebracht. Die Ätzstoppschicht 3 ist vorzugsweise eine sehr dünne anorganische Schicht, die bevorzugt eine Dicke von weniger als 30 nm aufweist. Die geringe Dicke der Ätzstoppschicht hat den Vorteil, dass der mittels der ersten Nanostruktur 11 erzeugte Brechzahlgradient nur geringfügig beeinflusst wird. Die Ätzstoppschicht 3 kann beispielsweise eine SiO₂-Schicht sein.

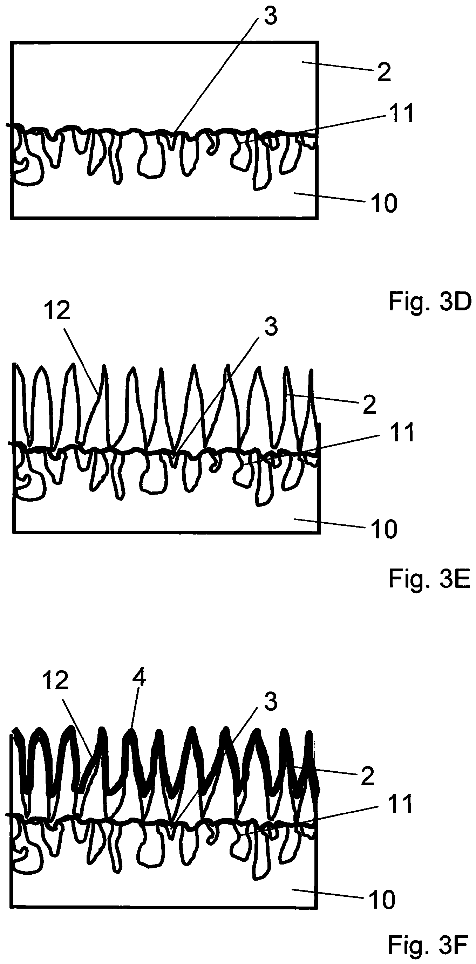

Bei dem in Figur 3D dargestellten weiteren Zwischenschritt wird eine Schicht 2 aus einem zweiten organischen Material auf die erste Nanostruktur 11 aufgebracht. Die Schicht 2 aus dem zweiten organischen Material weist bevorzugt eine Dicke zwischen 200 nm und 400 nm auf.

Bei dem in Figur 3E dargestellten Zwischenschritt ist mittels eines zweiten Plasmaätzprozesses eine zweite Nanostruktur 12 in der Schicht 2 aus dem zweiten organischen Material erzeugt worden. Die Schicht 2 wird dabei vorteilhaft derart strukturiert, dass ihre effektive Brechzahl in der vom Substrat 10 zur Oberfläche zeigenden Richtung abnimmt. Die mittlere effektive Brechzahl der mit der Nanostruktur 12 versehenen Schicht 2 beträgt bevorzugt zwischen 1,08 und 1,25. Die mittlere Brechzahl der nanostrukturierten Schicht 2 ist somit vorteilhaft noch kleiner als die mittlere effektive Brechzahl der in der Oberfläche des Substrats 10 erzeugten ersten Nanostruktur 11.

Der durch die erste Nanostruktur 11 gebildeten Brechzahlgradientenschicht im Substrat 10 folgt somit eine durch die zweite Nanostruktur 12 gebildete zweite Brechzahlgradientenschicht nach, in der die Brechzahl auf einen noch geringeren Wert abfällt. Vorzugsweise nimmt die Brechzahl im gesamten Bereich der ersten Nanostruktur 11 und der zweiten Nanostruktur 12 in der Richtung vom Substrat 10 zur Oberfläche hin ab. Auf diese Weise wird eine insgesamt sehr dicke Brechzahlgradientenschicht erzeugt, die eine besonders gute Entspiegelung über einen großen Winkel- und Wellenlängenbereich bewirkt. Insbesondere hat sich herausgestellt, dass die mit dem Verfahren hergestellte Entspiegelungsschicht auch bei gekrümmten Substraten eine sehr gute Entspiegelung bis in die Randbereiche des Substrats bewirkt, da die mit dem Verfahren hergestellte Entspiegelungsschicht vergleichsweise tolerant gegenüber Änderungen der Schichtdicke ist.

Bei einer vorteilhaften Ausgestaltung des Verfahrens wird, wie in Figur 3F dargestellt, eine Schutzschicht 4 auf die zweite Nanostruktur 12 aufgebracht. Die Schutzschicht 4 weist vorzugsweise eine Dicke von weniger als 30 nm auf und kann beispielsweise eine SiO₂-Schicht sein. Die Schutzschicht 4 dient insbesondere zum Schutz der aus einem organischen Material bestehenden Nanostruktur 12 vor äußeren Einflüssen, insbesondere vor einer mechanischen Beschädigung.

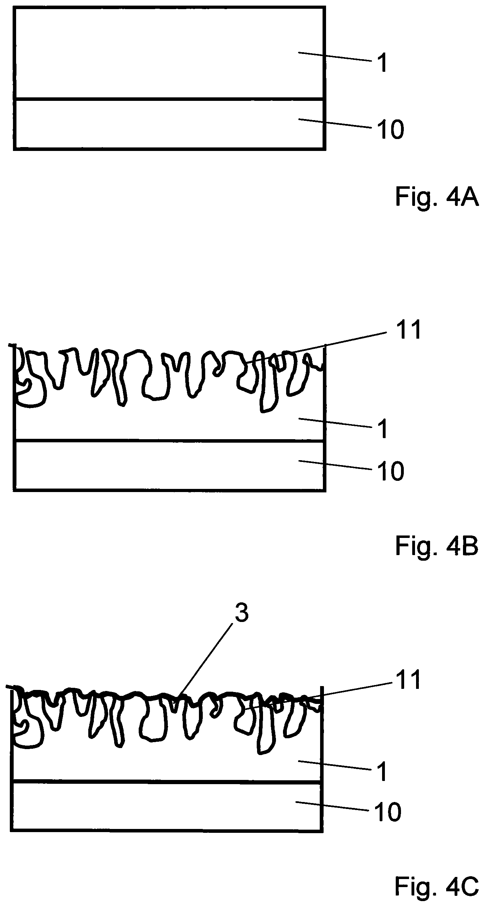

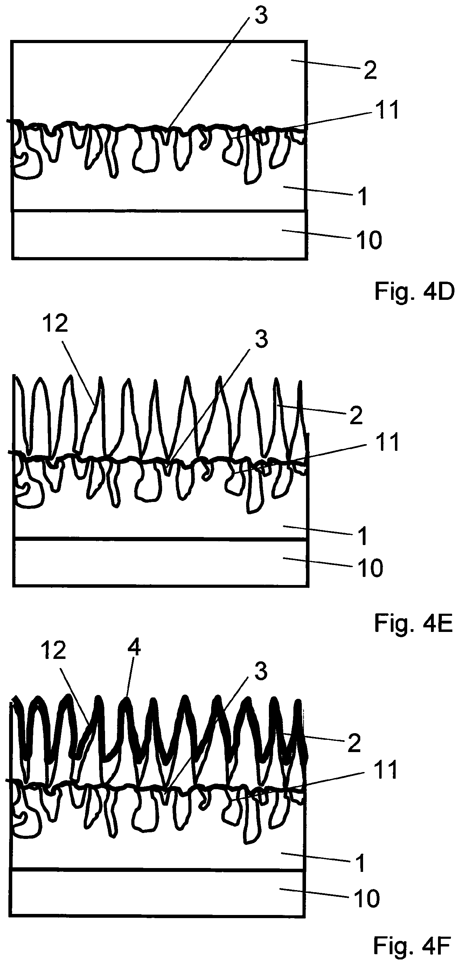

Das in den Figuren 4A bis 4F dargestellte zweite Ausführungsbeispiel des Verfahrens zur Herstellung einer Entspiegelungsschicht unterscheidet sich von dem zuvor beschriebenen ersten Ausführungsbeispiel dadurch, dass in einem in Figur 4A dargestellten ersten Verfahrensschritt eine Schicht 1 aus einem ersten organischen Material auf das Substrat 10 aufgebracht wird.

Bei dem in Figur 4B dargestellten Verfahrensschritt des Herstellens der ersten Nanostruktur 11 mit einem ersten Plasmaätzprozess wird die erste Nanostruktur 11 nicht in der Oberfläche des Substrats 10, sondern in der zuvor aufgebrachten Schicht 1 aus dem ersten organischen Material erzeugt. Diese Ausführungsform des Verfahrens ist insbesondere dann vorteilhaft, wenn das Substrat 10 aus einem Material besteht, das selbst nicht oder nur schwer mit einem Plasmaätzprozess strukturierbar ist. Das Substrat 10 kann bei dieser Ausführungsform beispielsweise ein Glas, insbesondere Quarzglas, aufweisen.

Die weiteren in den Figuren 4C bis 4F dargestellten Verfahrensschritte entsprechen den zuvor in Verbindung mit den Figuren 3C bis 3F erläuterten Verfahrensschritten des ersten Ausführungsbeispiels. Diese werden daher nicht nochmals näher erläutert.

Die folgende Tabelle 1 zeigt eine Übersicht verschiedener Designs D1 bis D5 für Ausführungsbeispiele der Entspiegelungsschicht.

| | D1 | D2 | D3 | D4 | D5 |
|---|---|---|---|---|---|
| Substrat (Linse) | Glas (BK7) | Cycloolefin-Polymer (Zeonex) | Quarzglas (Suprasil) | Glas (LAK-9) | Glas (BK7) |
| SiO₂ (n=1.46) | 85 nm | | | 110 nm | 110 nm |
| erste Nanostruktur (n₁=1.3) | 120 nm | 120 nm | 120 nm | 120 nm | 120 nm |
| zweite Nanostruktur (n₂=1.1) | 130 nm | 140 nm | 140 nm | 140 nm | 140 nm |

Bei den Designs D1 und D5 wird als Substrat jeweils eine Linse verwendet, wie Sie in Fig. 1 dargestellt ist. Die Designs wurden für verschiedene Substratmaterialien berechnet, die in der Tabelle angegeben sind. Bei den Designs D1, D4 und D5 ist zwischen dem Substrat und der ersten Nanostruktur jeweils eine SiO₂-Schicht angeordnet, deren Dicke in der Tabelle angegeben ist. Weiterhin sind in der Tabelle die Strukturtiefen der ersten und der zweiten Nanostruktur angegeben.

In der folgenden Tabelle 2 ist die in den Punkten A und B der in Fig. 1 dargestellten Linse erzielbare Restreflexion RR für die Designs D1 bis D5 gemäß Ausführungsbeispielen, für ein Vergleichsbeispiel V1 (Interferenzschichtsystem aus 4 Schichten) sowie für ein Vergleichsbeispiel V2 (Einzelschicht aus MgF2) angegeben. Die angegebene Restreflexion ist über den Wellenlängenbereich von 400 nm bis 700 nm gemittelt und für senkrechten Lichteinfall (Einfallswinkel 0°) angegeben.

| | D1 | D2 | D3 | D4 | D5 | V1 | V2 |
|---|---|---|---|---|---|---|---|
| Linse | Glas (BK7) | Cycloolefin-Polymer (Zeonex) | Quarzglas (Suprasil) | Glas (LAK-9) | Glas (BK7) | Glas (BK7) | Glas (BK7) |
| RR(A) (%) | 0,08 | 0,2 | 0,2 | 0,3 | 0,06 | 0,5 | 1,6 |
| RR(B) (%) | 0,2 | 0,5 | 0,52 | 0,2 | 0,27 | 8,5 | 2,5 |

Bei einem Ausführungsbeispiel des Verfahrens wurde eine Entspiegelungsschicht gemäß dem Design D2 hergestellt. Der Ablauf des Verfahrens entspricht den Figuren 3A bis 3F. Dabei wurde eine Kunststofflinse 10 aus dem unter der Bezeichnung Zeonex E48R erhältlichen Cyclooelfin-Polymer mit einer Entspiegelungsschicht versehen. Dazu wurde zuerst in einer Vakuumaufdampfanlage vom Typ APS 904 (Leybold-Optics) eine 2 nm dicke Initialschicht aus Ta₂O₅ aufgedampft. Anschließend wurde die erste Nanostruktur 11 durch einen ersten Plasmaätzprozess mittels einer Plasmaionenquelle der Vakuumaufdampfanlage erzeugt. Zur Erzeugung des Plasmas wurden Argon mit einer Flussrate von 13 sccm und Sauerstoff mit einer Flussrate von 30 sccm eingelassen. Die Plasmaionenquelle wurde mit einer BIAS-Spannung, die ein Maß für die Energie der auf die Oberfläche treffenden Ionen ist, von 120 V und einem Entladestrom von 50 A betrieben. In einer Ätzzeit von 250 Sekunden wurde eine erste Nanostruktur 11 in dem Substrat 10 erzeugt, die Strukturen mit einer Tiefe von 120 nm und einer effektiven Brechzahl n₁ = 1,30 aufweist.

Nachfolgend wurde eine Ätzstoppschicht 3 aufgedampft, bei der es sich um eine 15 nm dicke SiO2-Schicht handelt. Im nächsten Schritt im selben Vakuumprozess erfolgte die Abscheidung einer 250 nm dicken Melamin-Schicht 2 durch thermische Verdampfung mit einer Rate von 0,3 nm/s. Die Schichtdickenmonitorierung erfolgte hierbei über ein Schwingquarzmesssystem, bei dem die Massenzunahme detektiert wird. Anschließend wurde ein zweiter Plasmaätzprozess zur Erzeugung einer zweiten Nanostruktur 12 in der Melaminschicht durchgeführt. Der zweite Plasmaätzprozess wurde mit einer niedrigeren Ionenenergie von maximal 80eV durchgeführt. Unter diesen Bedingungen wird bei Melamin eine Ätzrate von ca. 0,8 nm/s erreicht, während die erste Nanostruktur 11 in dem Substrat 10 aus Zeonex nur eine Ätzrate von 0,3 nm/s aufweisen würde. In einer Ätzzeit von 300 s wurde die zweite Nanostruktur 12 erzeugt, deren effektive Brechzahl etwa n₂ = 1,1 beträgt. Abschließend wurde als Schutzschicht 4 eine 20 nm SiO₂-Schcht mittels Elektronenstrahlverdampfung auf die zweite Nanostruktur 12 aufgebracht. Auf diese Weise wurde in dem Substrat 10 eine erste Nanostruktur 11 mit einer Tiefe von 120 nm und in der Melamin-Schicht 2 eine zweite Nanostruktur 12 mit einer Tiefe von 140 nm erzeugt.

Bei einer Abwandlung des zuvor beschriebenen Ausführungsbeispiels wurde ein ebenes Kunststoffsubstrat 10 aus dem unter der Bezeichnung Zeonex E48R erhältlichen Cyclooelfin-Polymer mit einer Entspiegelungsschicht versehen. Dazu wurde zuerst in einer Vakuumaufdampfanlage vom Typ APS 904 (Leybold-Optics) eine 2 nm dicke Initialschicht aus TiO₂ aufgedampft. Anschließend wurde die erste Nanostruktur 11 durch einen ersten Plasmaätzprozess mittels einer Plasmaionenquelle der Vakuumaufdampfanlage erzeugt. Zur Erzeugung des Plasmas wurden Argon mit einer Flussrate von 13 sccm und Sauerstoff mit einer Flussrate von 30 sccm eingelassen. Die Plasmaionenquelle wurde mit einer BIAS-Spannung, die ein Maß für die Energie der auf die Oberfläche treffenden Ionen ist, von 120 V und einem Entladestrom von 50 A betrieben. In einer Ätzzeit von 200 Sekunden wurde eine erste Nanostruktur 11 in dem Substrat 10 erzeugt.

Nachfolgend wurde eine Ätzstoppschicht 3 aufgedampft, bei der es sich um eine 25 nm dicke SiO2-Schicht handelt. Im nächsten Schritt im selben Vakuumprozess erfolgte die Abscheidung einer 250 nm dicken Melamin-Schicht 2 durch thermische Verdampfung mit einer Rate von 0,3 nm/s. Die Schichtdickenmonitorierung erfolgte hierbei über ein Schwingquarzmesssystem, bei dem die Massenzunahme detektiert wird. Nachfolgend wurde eine 2 nm dicke Initialschicht aus TiO₂ aufgedampft.

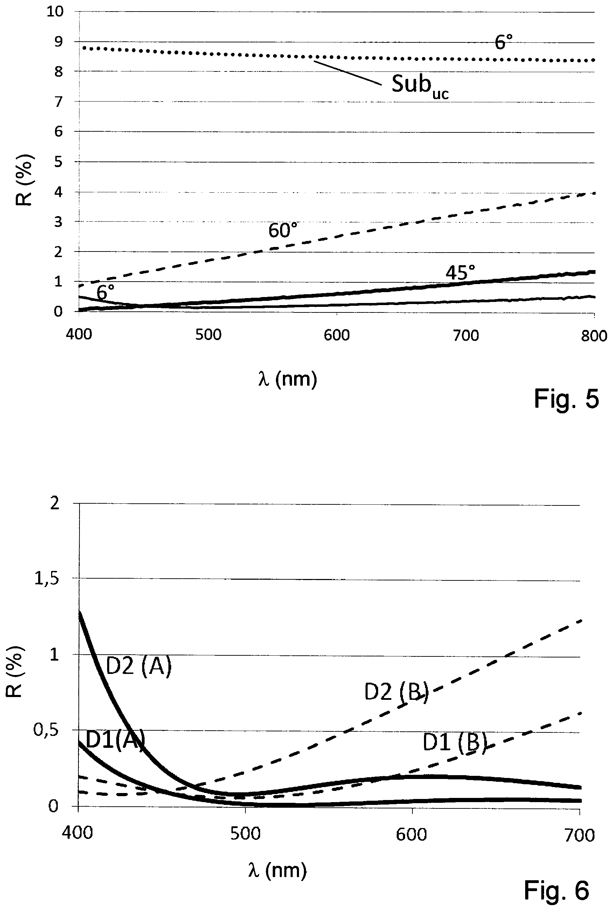

Anschließend wurde ein zweiter Plasmaätzprozess zur Erzeugung einer zweiten Nanostruktur 12 in der Melaminschicht durchgeführt. Der zweite Plasmaätzprozess wurde mit einer niedrigeren Ionenenergie von maximal 110 eV durchgeführt. Unter diesen Bedingungen wird bei Melamin eine Ätzrate von ca. 1 nm/s erreicht, während die erste Nanostruktur 11 in dem Substrat 10 aus Zeonex nur eine Ätzrate von 0,3 nm/s aufweisen würde. In einer Ätzzeit von 200 s wurde die zweite Nanostruktur 12 erzeugt. Abschließend wurde als Schutzschicht 4 eine 20 nm SiO₂-Schcht mittels Elektronenstrahlverdampfung auf die zweite Nanostruktur 12 aufgebracht. Auf diese Weise wurde in dem Substrat 10 eine erste Nanostruktur 11 mit einer Tiefe von 100 nm und in der Melamin-Schicht 2 eine zweite Nanostruktur 12 mit einer Tiefe von 130 nm erzeugt. Fig. 5 zeigt die Reflexionsspektren dieser Probe, gemessen für Einfallswinkel 6°, 45° und 60° im Vergleich zum Reflexionsspektrum unter 6° Einfallswinkel eines unbeschichteten Substrats (Sub_{uc}).

Bei einem weiteren Ausführungsbeispiel des Verfahrens wurde eine Entspiegelungsschicht gemäß dem Design D1 hergestellt. Der Ablauf des Verfahrens entspricht den Figuren 4A bis 4F. Dabei wurde als Substrat 10 eine optische Linse aus dem unter der Bezeichnung BK7 erhältlichen Glas verwendet. Zuerst wurde in einer Vakuumaufdampfanlage vom Typ APS 904 (Leybold-Optics) zunächst eine 85 nm Dicke SiO2-Schicht und darauf eine 150 nm dicke organische Schicht 1 aus MBP aufgedampft. Die Schichtdickenmonitorierung erfolgte über ein Schwingquarzmesssystem, bei dem die Massenzunahme detektiert wird. Anschließend wurde die erste Nanostruktur 11 in der ersten organischen Schicht 1 aus dem Material MBP durch einen ersten Plasmaätzprozess mittels einer Plasmaionenquelle der Vakuumaufdampfanlage erzeugt. Hierfür wurde durch Aufdampfen zunächst eine 2 nm dicke Initialschicht aus TiO₂ aufgebracht und anschließend in einem Argon/Sauerstoff-Plasma mittels der Plasmaionenquelle geätzt. Die Plasmaionenquelle wurde mit einer BIAS-Spannung, die ein Maß für die Energie der auf die Oberfläche treffenden Ionen ist, von 120 V und einem Entladestrom von 50 A betrieben. In einer Ätzzeit von 550 Sekunden wurde eine erste Nanostruktur 11 in der organischen Schicht 1 aus MBP erzeugt, die Strukturen mit einer Tiefe von etwa 120 nm und einer effektiven Brechzahl n₁ = 1,30 aufweist.

Im nächsten Schritt im selben Vakuumprozess erfolgte die Abscheidung einer 250 nm dicken Melamin-Schicht 2 durch thermische Verdampfung mit einer Rate von 0,3 nm/s. Die Schichtdickenmonitorierung erfolgte hierbei über ein Schwingquarzmesssystem, bei dem die Massenzunahme detektiert wird. Anschließend wurde ein zweiter Plasmaätzprozess zur Erzeugung einer zweiten Nanostruktur 12 in der Melaminschicht durchgeführt. Der zweite Plasmaätzprozess wurde mit einer niedrigeren Ionenenergie von maximal 80 eV durchgeführt. Unter diesen Bedingungen wird bei Melamin eine Ätzrate von ca. 0,8 nm/s erreicht, während die erste Nanostruktur 11 in der ersten organischen Schicht 1 aus MBP nur eine Ätzrate von weniger als 0,1 nm/s aufweisen würde. In einer Ätzzeit von 150 s wurde die zweite Nanostruktur 12 erzeugt, deren effektive Brechzahl etwa n₂ = 1,1 beträgt. Abschließend wurde als Schutzschicht 4 eine 20 nm SiO₂-Schcht mittels Elektronenstrahlverdampfung auf die zweite Nanostruktur 12 aufgebracht. Auf diese Weise wurde in der ersten organischen Schicht 1 eine erste Nanostruktur 11 mit einer Tiefe von 120 nm und in der zweiten organischen Schicht 2 aus Melamin eine zweite Nanostruktur 12 mit einer Tiefe von 140 nm erzeugt.

In Fig. 6 ist die Reflexion R in Abhängigkeit von der Wellenlänge λ an Positionen A und B der Linse für das Design D1 (Substrat aus BK7-Glas, n_{S} = 1,53) und das Design D2 (Substrat aus dem Cycloolefin-Polymer Zeonex, n_{S} = 1,53) dargestellt.

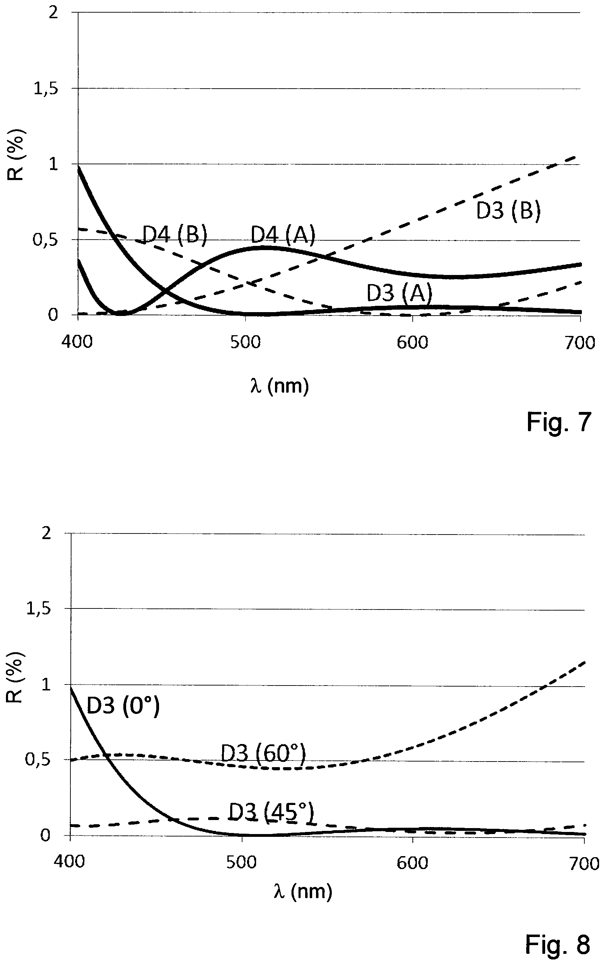

In Fig. 7 ist die Reflexion R in Abhängigkeit von der Wellenlänge λ an Positionen A und B der Linse für das Design D3 (Substrat aus Quarzglas mit n_{S} = 1,47) und das Design D4 (Substrat aus einem hochbrechenden Glas mit der Bezeichnung LAK-9 mit n_{S} = 1,7) dargestellt.

Die Fig. 8 zeigt für das Design D3 die Reflexion R in Abhängigkeit von der Wellenlänge λ für drei verschiedene Lichteinfallswinkel 0°, 45° und 60° bei Verwendung eines ebenen Substrats aus Quarzglas mit n_{S} = 1,47.

Die in den Figuren 5 bis 8 dargestellten Reflexionsspektren verdeutlichen, dass die Entspiegelungsschicht, die mit dem hierin beschriebenen Verfahren hergestellt wird, eine besonders geringe Restreflexion auch an Positionen auf gekrümmten Substraten aufweist, an denen aufgrund eines erhöhten Dampfeinfallswinkels beim Beschichtungsprozess reduzierte Schichtdicken auftreten. Weiterhin ist die mit dem Verfahren hergestellte Entspiegelungsschicht auch für ebene Substrate von Vorteil, wenn eine besonders geringe Restreflexion bei großen Lichteinfallswinkeln, beispielsweise bei Einfallswinkeln bis zu 80°, und/oder über einen großen Wellenlängenbereich, beispielsweise von 400 nm bis 1200 nm, erzielt werden soll.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

## Patentansprüche

1. Verfahren zur Herstellung einer Entspiegelungsschicht auf einem Substrat (10), umfassend die Verfahrensschritte:
- Erzeugung einer ersten Nanostruktur (11) in einem ersten Material mit einem ersten Plasmaätzprozess, wobei das erste Material das Material des Substrats (10) oder das Material einer auf das Substrat (10) aufgebrachten Schicht (1) aus einem ersten organischen Material ist,
- Aufbringen einer Schicht (2) aus einem zweiten Material auf die erste Nanostruktur (11), wobei das zweite Material ein organisches Material ist, und
- Erzeugung einer zweiten Nanostruktur (12) in der Schicht (2) aus dem zweiten Material mit einem zweiten Plasmaätzprozess, wobei das zweite Material bei der Durchführung des zweiten Plasmaätzprozesses eine größere Ätzrate als das erste Material aufweist.

2. Verfahren nach Anspruch 1,
wobei die erste Nanostruktur (11) eine Tiefe zwischen 100 nm und 200 nm aufweist.

3. Verfahren nach einem der vorhergehenden Ansprüche,
wobei mittels der ersten Nanostruktur (11) ein Brechzahlgradient in dem ersten Material erzeugt wird, so dass die Brechzahl in zunehmendem Abstand vom Substrat abnimmt.

4. Verfahren nach einem der vorhergehenden Ansprüche,
wobei die erste Nanostruktur (11) eine mittlere effektive Brechzahl n₁ zwischen 1,25 und 1,4 aufweist.

5. Verfahren nach einem der vorhergehenden Ansprüche,
wobei die Schicht (2) aus dem zweiten Material mit einer Schichtdicke zwischen 200 nm und 400 nm auf die erste Nanostruktur (11) aufgebracht wird.

6. Verfahren nach einem der vorhergehenden Ansprüche,.
wobei die zweite Nanostruktur (12) eine Tiefe zwischen 100 nm und 200 nm aufweist.

7. Verfahren nach einem der vorhergehenden Ansprüche,
wobei mittels der zweiten Nanostruktur (12) ein Brechzahlgradient in der Schicht (2) aus dem zweiten Material erzeugt wird, so dass die Brechzahl in zunehmendem Abstand vom Substrat (10) abnimmt.

8. Verfahren nach einem der vorhergehenden Ansprüche,
wobei die zweite Nanostruktur (12) eine mittlere effektive Brechzahl n₂ zwischen 1,08 und 1,25 aufweist.

9. Verfahren nach einem der vorhergehenden Ansprüche,
wobei die erste Nanostruktur (11) und/oder die zweite Nanostruktur (12) jeweils Strukturelemente in Form von Erhebungen, Vertiefungen und/oder Poren aufweisen, deren Breite im Mittel weniger als 150 nm beträgt.

10. Verfahren nach einem der vorhergehenden Ansprüche,
wobei vor dem Aufbringen der Schicht (2) aus dem zweiten Material eine Ätzstoppschicht (3) auf die erste Nanostruktur (11) aufgebracht wird, wobei die Ätzstoppschicht (3) eine Dicke von nicht mehr als 30 nm aufweist.

11. Verfahren nach einem der vorhergehenden Ansprüche,
wobei nach der Erzeugung der zweiten Nanostruktur (12) eine Schutzschicht (4) auf die zweite Nanostruktur (12) aufgebracht wird, wobei die Schutzschicht (4) eine Dicke von nicht mehr als 30 nm aufweist.

12. Verfahren nach einem der vorhergehenden Ansprüche,
wobei das erste Material das Material des Substrats (10) ist und das Substrat (10) PMMA, Polycarbonat, ein Cycloolefin, Polyamid oder PTFE aufweist.

13. Verfahren nach einem der Ansprüche 1 bis 11,
wobei das erste Material das Material einer auf das Substrat (10) aufgebrachten Schicht (1) aus einem ersten organischen Material ist.

14. Verfahren nach einem der vorhergehenden Ansprüche,
wobei das Substrat (10) ein gekrümmtes Substrat ist.

15. Verfahren nach einem der vorhergehenden Ansprüche,
wobei das Substrat (10) eine Brechzahl n_{S} < 1,7 aufweist.

## Claims

1. Method for producing an antireflection coating on a substrate (10), comprising the method steps:
- generating a first nanostructure (11) in a first material by means of a first plasma etching process, wherein the first material is the material of the substrate (10) or the material of a layer (1) made of a first organic material applied onto the substrate (10),
- applying a layer (2) made of a second material onto the first nanostructure (11), wherein the second material is an organic material, and
- generating a second nanostructure (12) in the layer (2) made of the second material by means of a second plasma etching process, wherein the second material has a higher etching rate than the first material when carrying out the second plasma etching process.

2. Method according to Claim 1,
wherein the first nanostructure (11) has a depth of between 100 nm and 200 nm.

3. Method according to one of the preceding claims,
wherein a refractive index gradient is generated in the first material by means of the first nanostructure (11) such that the refractive index decreases with increasing distance from the substrate.

4. Method according to one of the preceding claims,
wherein the first nanostructure (11) has a mean effective refractive index n₁ of between 1.25 and 1.4.

5. Method according to one of the preceding claims,
wherein the layer (2) made of the second material is applied with a layer thickness of between 200 nm and 400 nm onto the first nanostructure (11).

6. Method according to one of the preceding claims,
wherein the second nanostructure (12) has a depth of between 100 nm and 200 nm.

7. Method according to one of the preceding claims,
wherein a refractive index gradient is generated in the layer (2) made of the second material by means of the second nanostructure (12) such that the refractive index decreases with increasing distance from the substrate (10).

8. Method according to one of the preceding claims,
wherein the second nanostructure (12) has a mean effective refractive index n₂ of between 1.08 and 1.25.

9. Method according to one of the preceding claims,
wherein the first nanostructure (11) and/or the second nanostructure (12) each have structure elements in the form of elevations, recesses and/or pores, the width of which on average is less than 150 nm.

10. Method according to one of the preceding claims,
wherein an etch stop layer (3) is applied onto the first nanostructure (11) before applying the layer (2) made of the second material, wherein the etch stop layer (3) has a thickness of no more than 30 nm.

11. Method according to one of the preceding claims,
wherein a protection layer (4) is applied onto the second nanostructure (12) after generating the second nanostructure (12), wherein the protection layer (4) has a thickness of no more than 30 nm.

12. Method according to one of the preceding claims,
wherein the first material is the material of the substrate (10) and the substrate (10) comprises PMMA, polycarbonate, a cycloolefin, polyamide or PTFE.

13. Method according to one of Claims 1 to 11,
wherein the first material is the material of a layer (1) made of a first organic material applied onto the substrate (10).

14. Method according to one of the preceding claims,
wherein the substrate (10) is a curved substrate.

15. Method according to one of the preceding claims,
wherein the substrate (10) has a refractive index nₛ < 1.7.

## Revendications

1. Procédé pour fabriquer une couche antireflet sur un substrat (10), comprenant les étapes suivantes :
- génération d'une première nanostructure (11) dans un premier matériau avec un premier processus de gravure au plasma, le premier matériau étant le matériau du substrat (10) ou le matériau d'une couche (1) en un premier matériau organique appliquée sur le substrat (10),
- application d'une couche (2) en un deuxième matériau sur la première nanostructure (11), le deuxième matériau étant un matériau organique, et
- génération d'une deuxième nanostructure (12) dans la couche (2) constituée du deuxième matériau avec un deuxième processus de gravure au plasma, le deuxième matériau présentant un facteur de gravure plus élevé que le premier matériau lors de l'exécution du deuxième processus de gravure au plasma.

2. Procédé selon la revendication 1, la première nanostructure (11) présentant une épaisseur comprise entre 100 nm et 200 nm.

3. Procédé selon l'une des revendications précédentes, un gradient d'indice de réfraction étant produit dans le premier matériau au moyen de la première nanostructure (11), de sorte que l'indice de réfraction diminue à mesure que l'écart par rapport au substrat augmente.

4. Procédé selon l'une des revendications précédentes, la première nanostructure (11) présentant un indice de réfraction effectif moyen n₁ compris entre 1,25 et 1,4.

5. Procédé selon l'une des revendications précédentes, la couche (2) constituée du deuxième matériau étant appliquée sur la première nanostructure (11) avec une épaisseur de couche comprise entre 200 nm et 400 nm.

6. Procédé selon l'une des revendications précédentes, la deuxième nanostructure (12) présentant une épaisseur comprise entre 100 nm et 200 nm.

7. Procédé selon l'une des revendications précédentes, un gradient d'indice de réfraction étant produit au moyen de la deuxième nanostructure (12) dans la couche (2) constituée du deuxième matériau, de sorte que l'indice de réfraction diminue à mesure que l'écart par rapport au substrat (10) augmente.

8. Procédé selon l'une des revendications précédentes, la deuxième nanostructure (12) présentant un indice de réfraction effectif moyen n₂ compris entre 1,08 et 1,25.

9. Procédé selon l'une des revendications précédentes, la première nanostructure (11) et/ou la deuxième nanostructure (12) possédant respectivement des éléments de structure sous la forme de bossages, d'enfoncements et/ou de pores dont la largeur est en moyenne inférieure à 150 nm.

10. Procédé selon l'une des revendications précédentes, une couche barrière de gravure (3) étant appliquée sur la première nanostructure (11) avant l'application de la couche (2) constituée du deuxième matériau, la couche barrière de gravure (3) présentant une épaisseur n'excédant pas 30 nm.

11. Procédé selon l'une des revendications précédentes, une couche de protection (4) étant appliquée sur la deuxième nanostructure (12) après la génération de la deuxième nanostructure (12), la couche de protection (4) présentant une épaisseur n'excédant pas 30 nm.

12. Procédé selon l'une des revendications précédentes, le premier matériau étant le matériau du substrat (10) et le substrat (10) présentant du PMMA, du polycarbonate, une cyclooléfine, du polyamide ou du PTFE.

13. Procédé selon l'une des revendications 1 à 11, le premier matériau étant le matériau d'une couche (1) en un premier matériau organique appliquée sur le substrat (10).

14. Procédé selon l'une des revendications précédentes, le substrat (10) étant un substrat curviligne.

15. Procédé selon l'une des revendications précédentes, le substrat (10) présentant un indice de réfraction nₛ < 1,7.
